# EUROPEAN PATENT APPLICATION

(11) **EP 2 336 876 A1**
(43) Date of publication of application: **22.06.2011**
(21) Application number: 10164394.8
(22) Date of filing: 28.05.2010
(51) Int. Cl.: G06F 3/14

(54) **Multi-display system, display device, and driving method thereof**

(30) Priority: 06.11.2009 KR 20090106724
(71) Applicant: SAMSUNG ELECTRONICS CO., LTD., Suwon-si, Gyeonggi-do (KR)
(72) Inventor: Kim, Young-kook, Suwon-si Gyeonggi-do (KR)
(74) Representative: Hewett, Jonathan Michael Richard

(57) **Abstract**

A multi-display system, a display device and a driving method thereof are provided. A multi-display system includes: a first display device which determines whether a video signal is input to the first display device, outputs a control signal which indicates whether the video signal is input to the first display device , and displays a video based on the input video signal if it is determined that the video signal is input; and a second display device which enters one of a power saving mode and a normal mode according to the control signal output by the first display device, and displays the video based on the video signal if the control signals indicates that the video signal is input.

## Description

The present invention relates to a multi display system, a display device and a driving method thereof, and more particularly, to a multi display system, a display device and a driving method thereof which reduce power consumption.

Recently, a multi-monitor has been used to extend a work area of a computer program executed in a single computer system. The multi-monitor extends an area of a screen but may be restrictive in size, resolution, number of monitors, etc. A video of a computer is output through a video card or a video adapter, and each monitor of the multi-monitor monitors a video signal output from the video card. If a video signal output from the video card is not input during a predetermined time period, the multi-monitor operates in a display power management signalling (DPMS) state, that is, a power saving mode. In the power saving mode, power supplied to elements, other than an element determining whether there is a video signal, is suspended. Accordingly, in the power saving mode, the total power consumed by the element detecting an input of a video signal corresponds to the power consumption of the multi-monitor.

In the power saving mode, there is no operation of a monitor and no display of a video for a user. Accordingly, in the power saving mode, all monitors configuring the multi-monitor monitor whether there is an input of a video signal which may cause unnecessary power consumption. Also, if a video signal is erroneously determined to be input, for example, due to noise, etc., thereby by causing operation in a normal mode although the video signal is not input, power may be unnecessarily consumed.

Exemplary embodiments provide a multi-display system, a display device and a driving method thereof making only a specific display device monitor whether there is an input of a video signal, thereby reducing power consumption.

According to an aspect of an embodiment, there is provided a multi-display system including: a first display device which determines whether a video signal is input to the first display device, outputs a control signal which indicates whether a the video signal is input to the first display device , and displays a video based on the input video signal if it is determined that the video signal is input; and a second display device which enters one of a power saving mode and a normal mode corresponding according to the control signal output by the first display device, and displays the video based on the video signal if the control signal indicates that the video signal is input.

The second display device may enter the power saving mode if the control signal indicates that the video signal is not input.

The second display device may enter the normal mode if the control signal indicates that the video signal is input.

The first display device may determine whether the video signal is input based on whether at least one of a horizontal synchronization signal and a vertical synchronization signal of the video signal is input to the first display device.

The first display device may output the control signal to each of the plurality of display devices other than the first display device.

The second display device may transmit the control signal to a third display device of the plurality of display devices.

The video signal may include one of a video graphics array (VGA), a digital video interactive (DVI) and a high definition multi-media interface (HDMI)

According to an aspect of another exemplary embodiment, there is provided a display device of a multi-display system, the display device including: a signal receiving unit which receives a video signal; a signal processing unit which processes the video signal received by the signal receiving unit; a display unit which displays a video based on the video signal processed by the signal processing unit; a communicating unit which communicates with at least one other display device of the multi-display system; and a control unit which outputs a control signal which indicates whether the video signal is input to the signal receiving unit, to the other display device through the communicating unit, and controls the signal processing unit to display the video based on the video signal if the video signal is input.

The control unit may output the control signal to all other display devices of the multi-display system.

According to an aspect of another exemplary embodiment, there is provided a display device of a multi-display system, the display device including: a signal receiving unit which receives a video signal; a signal processing unit which processes the video signal received by the signal receiving unit; a display unit which displays a video based on the video signal processed by the signal processing unit; a communicating unit which communicates with a first display device of the multi-display system; and a control unit which enters one of a power saving mode and a normal mode corresponding to a control signal if the control signal is received from the first display device, and controls the signal processing unit to display a video based on the video signal if the video signal is input.

The control unit may transmit the control signal to a third display device of the multi-display system.

The control unit may enter the power saving mode if the control signal is input which indicates that the video signal is not input.

The control unit may enter the normal mode if the control signal is input which indicates that the video signal is input.

According to an aspect of another exemplary embodiment, there is provided a driving method of a multi-display system which includes at least first and second display devices, at a first display device, determining whether a video signal is input to the first display device, outputting a control signal which indicates whether the video signal is input to the first display device based on a result of the determining, and displaying a video based on the video signal if it is determined that the video signal is input; and at the second display device, entering one of a power saving mode and a normal mode according to the control signal output by the first display device, and displaying the video based on the video signal if the control signal indicates that the video signal is input.

The second display device may transmit the control signal output from the first display device to a third display device.

According to an aspect of another exemplary embodiment, there is provided a driving method of a multi-display system, the driving method including: determining whether the video signal is input; and outputting a control signal which indicates whether the video signal is input, and displaying a video based on the input video signal if it is determined that the video signal is input.

The control signal may be respectively output to other display devices of the multi-display system.

According to an aspect of another exemplary embodiment, there is provided a driving method of a display device of a multi-display system, the driving method including: receiving at the display device a control signal which indicates whether a video signal is input to a first display device of the multi-display system; and entering at the display device one of a power saving mode and a normal mode according to the control signal, and displaying at the display device a video based on the video signal if the control signal indicates that the video signal is input to the first display device.

The display device may transmit the control signal to a second display device of the multi-display system.

The above and/or other aspects will become apparent and more readily appreciated from the following description of the exemplary embodiments, taken in conjunction with the accompanying drawings, in which:
FIG. 1 illustrates a configuration of a multi-display system according to an exemplary embodiment;
FIG. 2 illustrates a configuration of a first display device of the multi-display system according to an exemplary embodiment;
FIG. 3 is a flowchart illustrating an operation of the multi-display system according to an exemplary embodiment;
FIG. 4 is a flowchart illustrating an operation of the first display device of the multi-display system according to an exemplary embodiment; and
FIG. 5 is a flowchart illustrating an operation of a second display device of the multi-display system according to an exemplary embodiment.

The exemplary embodiments are described below with reference to the accompanying figures, wherein like reference numerals refer to like elements throughout. Repetitive description with respect to like elements of different exemplary embodiments is omitted for clarity.

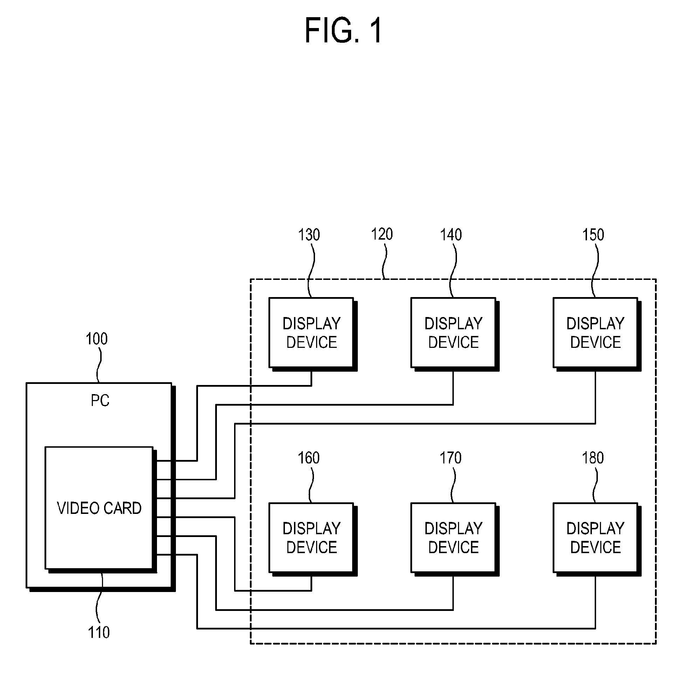

FIG. 1 illustrates a configuration of a multi-display system 120 according to an exemplary embodiment.

In the exemplary embodiment, a display device is exemplarily described to be embodied by a monitor, and a multi-monitor system is exemplarily described to be embodied by six monitors connected to a single computer.

Referring to FIG. 1, six display devices, that is, a first display device 130, a second display device 140, a third display device 150, a fourth display device 160, a fifth display device 170 and a sixth display device 180 are connected to a single computer 100 through a signal cable, etc. The computer (PC) 100 outputs a video signal to each of the display devices 130 to 180 depending on a user manipulation to display a video. A video signal is output through a video card 110 or a video adapter provided in the computer 100, and includes R, G and B video signals, a horizontal synchronization signal (H-sync) and a vertical synchronization signal (V-sync). Here, the video signal includes a video graphics array (VGA), a digital video interactive (DVI), a high definition multimedia interface (HDMI), etc.

In an exemplary embodiment, the video card 110 can employ a dual video card (not shown) supporting a separate video signal to each of the display devices 130 to 180 from a single video card, or an independent video card separately supporting each of the display devices 130 to 180 may be mounted.

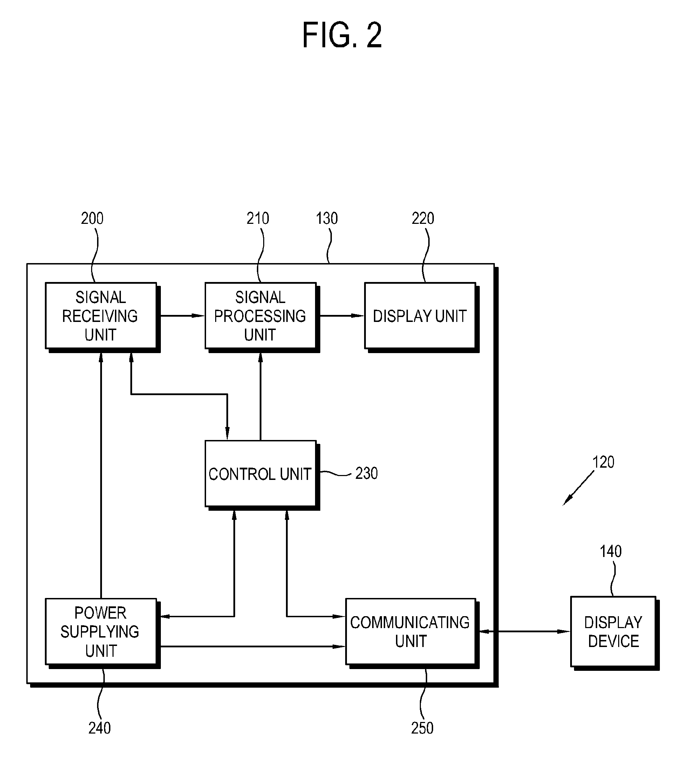

FIG. 2 illustrates a configuration of the first display device 130 of the multi-display system 120 according to an exemplary embodiment.

Although only the first display device 130 and the second display device 140 among the first to sixth display devices 130 to 180 are illustrated in FIG. 2, and the configuration and the operating principle of the second to sixth display devices 150 to 180 may be substantially the same as the first display device 130 unless specified otherwise.

Referring to FIG. 2, the first display device 130 according to an exemplary embodiment includes a signal receiving unit 200, a signal processing unit 210, a display unit 220, a communicating unit 250, a power supplying unit 240 and a control unit 230.

The signal receiving unit 200 receives a video signal from an external source. Also, although not shown, the signal receiving unit 200 may be configured to receive an audio signal for an audio output, a data signal for a data information output, etc. The video signal, the audio signal and the data signal may be received together through a single signal.

The signal processing unit 210 performs signal processing so that video can be displayed by the display unit 220 with respect to a received video signal. The video processing performed by the signal processing unit 210 may include decoding, image enhancing, scaling, etc. Also, the signal processing unit 210 may perform processing with respect to a received audio signal and/or a received data signal.

The display unit 220 displays video based on a video signal processed by the signal processing unit 210. The display unit 220 may be a liquid crystal display (LCD). In this case, although not shown, the display unit 220 may include an LCD panel, a panel driving unit, a backlight, etc. The display unit 220 may display data information included in a data signal processed by the signal processing unit 210.

The communicating unit 250 performs communication with the other display devices 140 to 180. In particular, the communicating unit 250 performs communication under the control of the control unit 230, and may transmit information to the other display devices 140 to 180 or receive information from the other display devices 140 to 180. The communicating unit 250 may utilize a general-purpose communication standard, such as a recommended standard (RS)-232, an RS-485, etc.

The power supplying unit 240 supplies driving power to an element such as the signal receiving unit 200, etc. The power supplying unit 240 receives alternating current (AC) power which is a use power, and converts this into electric power of a level necessary for operation of each element to supply power to the corresponding element. In FIG. 2, a path of power supplied to the signal processing unit 210 and the display unit 220 from the power supplying unit 240 is omitted for clarity of the description.

If a video signal is input, the control unit 230 controls the signal processing unit 210 so that the input video signal can be displayed. Also, the control unit 230 generally controls each element. Also, the control unit 230 may control the power supplying unit 240 to suspend the supply of power with respect to each element in a power saving mode. Also, the control unit 230 may inform other display devices about whether a video signal is input.

An operation of the multi-display system 120 according to an exemplary embodiment will be described. The computer 100 and the video card 110 refer to FIG. 1. Also, in the following explanation, although the configuration of the second display device 140 is not shown, 'a' is added to a reference numeral of the second display device 140 which is a same element as that of the first display device 130.

Initially, in a normal mode in which a video signal including a vertical synchronization signal and a horizontal synchronization signal are output from the video card 110 of the computer 100, the signal receiving unit 200 of the first display device 130 and the signal receiving unit 200a of the second display device 140 receive a video signal, and the power supplying unit 240 of the first display device 130 and the power supplying unit 240a of the second display device 140 supply all elements of the first display device and the second display device 140 including the signal receiving unit 200 of the first display device 130 and the signal receiving unit 200a of the second display device 140 with electric power.

In the normal mode, if the signal receiving 200 of the first display device and the signal receiving unit 200a of the second display device fail to receive a video signal during a predetermined time, the control unit 230 of the first display device 130 and the control unit 230a of the second display device 140 determine that no video signal is output from the video card 110 of the computer 100, and cause the first display device 130 and the second display device 140 to enter a power saving mode. Here, the power saving mode refers to the case that a horizontal synchronization signal and a vertical synchronization signal fail to be detected in the signal receiving unit 200 of the first display device 130 and the signal receiving unit 200a of the second display device 140. Also, if no video signal is input, the control unit 230 of the first display device 130 outputs to the second display device 140 a control signal informing the second display device 140 that no video signal is input. The control unit 230a of the second display device 140 enters the power saving mode if the control signal received from the first display device indicates that no video signal is input.

If the first display device 130 and the second display device 140 enter the power saving mode, the first display device 130 and the second display device 140 suspend supplying power except to the control unit 230 of the first display device 130 and the control unit 230a of the second display device 140 and a specified element.

In the power saving mode, with respect to an operating process of the first display device 130 and the second display device 140, at first, the control unit 230 of the first display device 130 controls the power supplying unit 240 to block electric power supplied to each element. However, since the signal receiving unit 200 monitors whether a video signal is output from the video card 110 of the computer 100, the electric power is supplied thereto in the power saving mode.

With respect to the second display device 140, the control unit 230a controls the power supplying unit 240a to block electric power supplied to each element. However, in the power saving mode, the second display device 140 does not monitor a video signal output from the video card 110 of the computer 100. That is, in the case of the multi-display system according to an exemplary embodiment, in the power saving mode, monitoring with respect to a video signal output from the video card 110 of the computer 100 is performed only in the first display device 130. Accordingly, the power supplied to the signal receiving unit 200a of the second display device 140 is blocked.

If a video signal is output from the video card 110 of the computer 100 because of a user input, etc. in the power saving mode, the signal receiving unit 200 of the first display device 130 transmits the received video signal to the control unit 230. The control unit 230 determines whether a horizontal synchronization signal and a vertical synchronization signal of the video signal are received, and then controls the power supplying unit 240 so that electric power can be supplied to each element so that each element enters the normal mode if the horizontal synchronization signal and the vertical synchronization signal are received. Alternatively, the signal receiving unit 200 may determine whether a horizontal synchronization signal and a vertical synchronization signal are input during the process of monitoring whether a video signal is input, and transmit a signal informing the control unit 230 to enter the normal mode if the horizontal and vertical synchronization signals are determined to be input.

Although a video signal is output from the video card 110 of the computer 100, the second display device 140 is maintained in a power saving mode. Accordingly, the control unit 230 of the first display device 130 outputs a control signal informing the control unit 230a of the second display device 140 that the video signal is output from the video card 110 of the computer 100 so that the second display device 140 can enter the normal mode.

If the control unit 230a of the second display device 140 receives the control signal from the control unit 230 of the first display device 130, the control unit 230a controls the power supplying unit 240a to supply electric power to each element. If electric power is supplied to the signal receiving unit 200a of the second display device 140, the signal receiving unit 200a transmits the video signal output from the video card 110 of the computer 100 to the signal processing unit 210a, and the control unit 230a causes the transmitted video signal to be displayed.

Here, in the display system 120 according to the present exemplary embodiment, if the first display device 130 transmits the control signal to the second display device 140, the second display device 140 may transmit the control signal to the third display device 150. With this method, the control signal may be transmitted to each of the display devices 140 to 180. Alternatively, the first display device 130 may respectively transmit the control signal to the other display devices 140 to 180.

Accordingly, power consumption, which is caused by operating in the normal mode when it is determined that a video signal is input as a result of, for example, noise, etc. although a video signal has not been input, can be reduced. Also, in a display system including a plurality of display devices, in the power saving mode, since all of the display devices do not monitor an input of a video signal, but only a specific display device monitors an input of a video signal, unnecessary power consumption can be prevented.

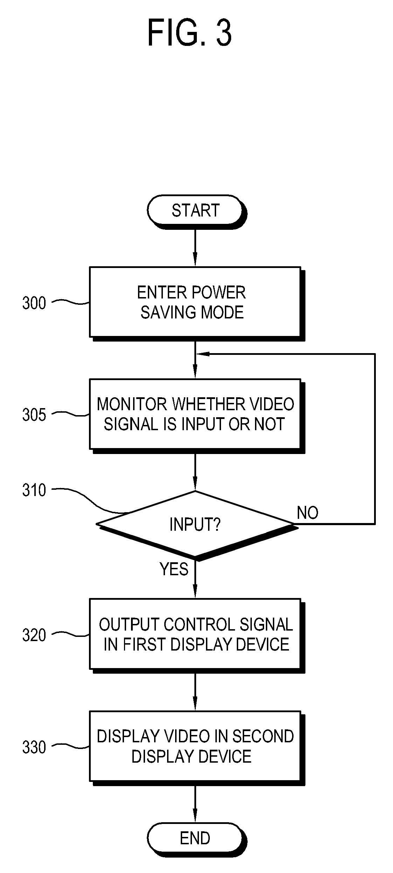

FIG. 3 is a flowchart illustrating an operation of the multi-display system 120 according to an exemplary embodiment.

The first display device 130 monitors whether a video signal is input in the first display device 130. If a video signal is not input during a predetermined time, the first display device 130 outputs a control signal which indicates that a video signal is not input. In response to the control signal, each of the display devices 130 to 180 enters a power saving mode (300).

If the power saving mode is entered, the first display device 130 monitors whether a video signal is input (305). If a horizontal synchronization signal and a vertical synchronization signal of the video signal are input (YES of 310), the first display device 130 outputs a control signal to the second display device 140 (320), and video is displayed based on the input video signal. If the second display device 140 receives the control signal, the second display device 140 receives a video signal, and displays a video based on the received video signal (330).

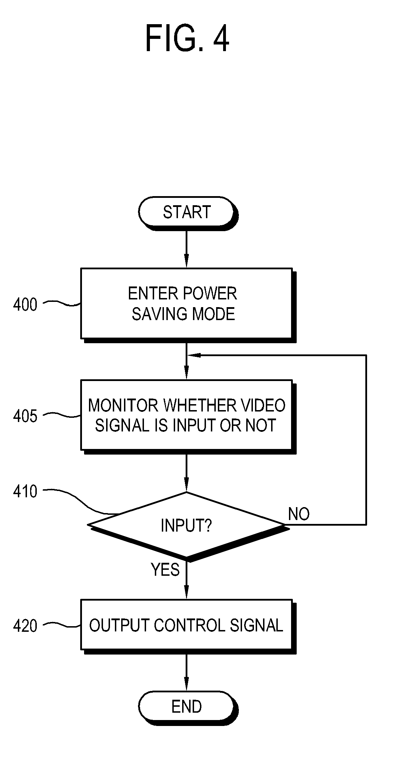

FIG. 4 is a flowchart illustrating an operation of the first display device 130 configuring the multi-display system 120 according to an exemplary embodiment.

If a video signal is not input during a predetermined time, the control unit 230 outputs a control signal which indicates that a video signal was not input. Also, the control unit 230 enters a power saving mode (400), and blocks supply of power to each element except the signal receiving unit 200. Then, the signal receiving unit 200 monitors whether a video signal is input (405). If a vertical synchronization signal and a horizontal synchronization signal of the video signal are input (YES of 410), the control unit 230 outputs a control signal to each of the display devices 140 to 180 or only to the second display device 140 (420), and enters the normal mode to display a video based on the received video signal.

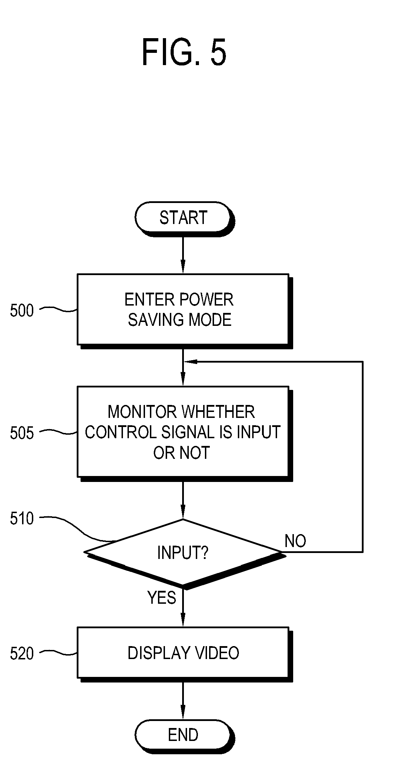

FIG. 5 is a flowchart illustrating an operation of the second display device 140 of the multi-display system 120 according to an exemplary embodiment.

If the first display device 130 outputs a control signal indicating that a video signal has not been input, the control unit 230a enters the power saving mode (500), and blocks supply of power to each element. The control unit 230a monitors whether a control signal is output from the first display device 130 (505). If a control signal is input (YES of 510), the control unit 230a enters a normal mode, and displays a video based on a received video signal (520).

As described above, according to the exemplary embodiments, since only a specific display device monitors whether a video signal is input, and the other display devices operate depending on a control signal output from the specific display device, power consumption for monitoring a video signal can be reduced.

Also, power consumption caused by operating in a normal mode when it is determined that a video signal is input as a result of noise, etc. although a video signal is not input, can be reduced.

Although a few exemplary embodiments have been shown and described, it will be appreciated by those skilled in the art that changes may be made in these exemplary embodiments without departing from the principles of the invention, the scope of which is defined in the appended claims.

## Claims

1. A multi-display system comprising:
a first display device which determines whether a video signal is input to the first display device, outputs a control signal which indicates whether the video signal is input to the first display device, and displays a video based on the video signal if it is determined that the video signal is input; and
a second display device which enters one of a power saving mode and a normal mode according to the control signal output by the first display device, and displays the video based on the video signal if the control signal indicates that the video signal is input.

2. The multi-display system according to claim 1, wherein the second display device enters the power saving mode if the control signal indicates that the video signal is not input.

3. The multi-display system according to claim 1, wherein the second display device enters the normal mode if the control signal indicates that the video signal is input.

4. The multi-display system according to claim 1, wherein the first display device determines whether the video signal is input based on whether at least one of a horizontal synchronization signal and a vertical synchronization signal of the video signal is input to the first display device.

5. The multi-display system according to claim 1, further comprising a third display device, wherein the first display device outputs the control signal to each of the second and third display devices.

6. The multi-display system according to claim 1, further comprising a third display device, wherein the second display device transmits the control signal output by the first display device to the third display device.

7. The multi-display system according to claim 1, wherein the video signal comprises one of a video graphics array, a digital video interactive and a high definition multimedia interface.

8. A display device of a multi-display system, the display device comprising:
a signal receiving unit which receives a video signal;
a signal processing unit which processes the video signal received by the signal receiving unit;
a display unit which displays a video based on the video signal processed by the signal processing unit;
a communicating unit which communicates with a first display device of the multi-display system; and
a control unit which enters one of a power saving mode and a normal mode according to a control signal received from the first display device, and controls the signal processing unit to display the video based on the video signal if the video signal is input.

9. The display device according to claim 8, wherein the control unit transmits the control signal received from the first display device to a second display device of the multi-display system.

10. The display device according to claim 8, wherein the control unit enters the power saving mode if the control signal indicates that the video signal is not input.

11. The display device according to claim 8, wherein the control unit enters the normal mode if the control signal indicates that the video signal is input.

12. A driving method of a display device of a multi-display system, the driving method comprising:
determining whether a video signal is input to the display device; and
outputting a control signal which indicates whether the video signal is input based on a result of the determining, and displaying a video based on the video signal if it is determined that the video signal is input.

13. The driving method according to claim 12, wherein the control signal is output to another display device of the multi-display system.

14. A driving method of a display device of a multi-display system, the driving method comprising:
receiving at the display device a control signal which indicates whether a video signal is input to a first display device of the multi-display system; and
entering at the display device one of a power saving mode and a normal mode according to the control signal, and
displaying at the display device a video based on the video signal if the control signal indicates that the video signal is input to the first display device.

15. The driving method according to claim 14, wherein the display device transmits the control signal to a second display device of the multi-display system.
